# EUROPEAN PATENT APPLICATION

(11) **EP 4 350 849 A2**
(43) Date of publication of application: **10.04.2024**
(21) Application number: 23200522.3
(22) Date of filing: 28.09.2023
(51) Int. Cl.: H01M 50/107, H01M 50/152, H01M 50/148, H01M 50/159, H01M 50/169, H01M 50/179, H01M 50/342, H01M 50/538, H01M 50/559, H01M 50/566, H01M 50/583

(54) **CYLINDRICAL SECONDARY BATTERY**

(30) Priority: 05.10.2022 KR 20220126939
(71) Applicant: Samsung SDI Co., Ltd., Yongin-si, Gyeonggi-do 17084 (KR)
(72) Inventor: LEE, Sang Hyo, 17084 Yongin-si (KR)
(74) Representative: Marks & Clerk LLP

(57) **Abstract**

A cylindrical secondary battery including: a cylindrical can having an open end in a longitudinal direction thereof; a cap plate coupled to the can and having an opening therein; an electrode assembly accommodated in the can and including a first electrode plate and a second electrode plate; and a first terminal. The first terminal includes: a base block electrically connected to the first electrode plate; a head facing the base block and exposed to the outside through the opening; and a fusible link connecting the base block and the head to each other and having a diameter less than that of the head.

## Description

### BACKGROUND

### 1. Field

Aspects of embodiments of the present disclosure relate to a cylindrical secondary battery.

### 2. Description of the Related Art

Generally, a cylindrical secondary battery includes an electrode assembly wound in a cylindrical shape accommodated together with an electrolyte in a cylindrical can and then sealed with a cap plate. The cap plate may be provided with a cap-up or a rivet terminal as a structure acting as a positive terminal.

Different from the cap-up structure, the rivet terminal has to be thicker than the cap-up structure because physical coupling strength is required to maintain compressive strength of a gasket. In addition, because soldering bonding is structurally impossible, it is not possible to implement a fusible link function in which current is cut off by melting a portion of the rivet terminal by high current.

The above-described information disclosed in this Background section serves as the background of the present disclosure and is for improving understanding of the background of the present disclosure and, thus, may include information that does not constitute the related (or prior) art.

### SUMMARY

Embodiments of the present disclosure provide a cylindrical secondary battery having a current blocking function.

According to an embodiment of the present disclosure, a cylindrical secondary battery includes: a cylindrical can having an open end in a longitudinal direction thereof; a cap plate coupled to the can and having an opening therein; an electrode assembly accommodated in the can and including a first electrode plate and a second electrode plate; and a first terminal. The first terminal includes: a base block electrically connected to the first electrode plate; a head facing the base block and exposed to the outside through the opening; and a fusible link connecting the base block and the head to each other and having a diameter less than that of the head.

The fusible link may have an hourglass shape.

The fusible link may be formed by soldering.

The first terminal may further include an insulation member between the base block and the head.

The insulation member may be made of a glass to metal sealing material.

The insulation member may have a protrusion that protrudes further outwardly than a surface of the head.

The cylindrical secondary battery may further include: a first electrode collector plate electrically connected to the first electrode plate and the first terminal; and a second electrode collector plate electrically connected to the second electrode plate and the can.

The can may have two open ends in the longitudinal direction. The cap plate may be coupled to one of the open ends of the can, and a circular bottom plate may be coupled to the other one of the open ends of the can.

The first electrode collector plate may face the cap plate, and the second electrode collector plate may face the bottom plate.

The cap plate may include: a flat first plate part; an inclined part inclined upwardly from the first plate part; a second plate part connected to the inclined part and parallel to the first plate part; and an extension part extending from the second plate part toward the base block.

A surface of the second plate part may protrude further outwardly than a surface of the head.

At least some of the above and other features of the invention are set out in the claims.

### BRIEF DESCRIPTION OF THE DRAWINGS

The accompanying drawings are included to provide a further description of the present disclosure and are incorporated in and constitute a part of this specification. The drawings illustrate embodiments of the present disclosure and, together with the description, explain aspects and features of the present disclosure. In the drawings:
FIG. 1 is a schematic cross-sectional view of a cylindrical secondary battery according to embodiments;
FIG. 2 is an enlarged cross-sectional view of a cap plate and a first terminal of the cylindrical secondary battery illustrated in FIG. 1;
FIG. 3 is an enlarged cross-sectional view of a bottom plate of the cylindrical secondary battery illustrated in FIG. 1;
FIG. 4 is a schematic cross-sectional view of an electrical connection relationship in the cylindrical secondary battery illustrated in FIG. 1;
FIG. 5 is a cross-sectional view of the fusible link separated from the cylindrical secondary battery illustrated in FIG. 4;
FIGS. 6 to 8 are views of a cap plate and a first terminal according to other embodiments; and
FIGS. 9 and 10 are views of a cap plate and a first terminal according to other embodiments.

### DETAILED DESCRIPTION

Embodiments of the present disclosure may be embodied in many different forms and should not be construed as being limited to the embodiments set forth herein. Rather, these embodiments are provided so that this disclosure will be thorough and complete, and will fully convey the scope of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) referring to the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

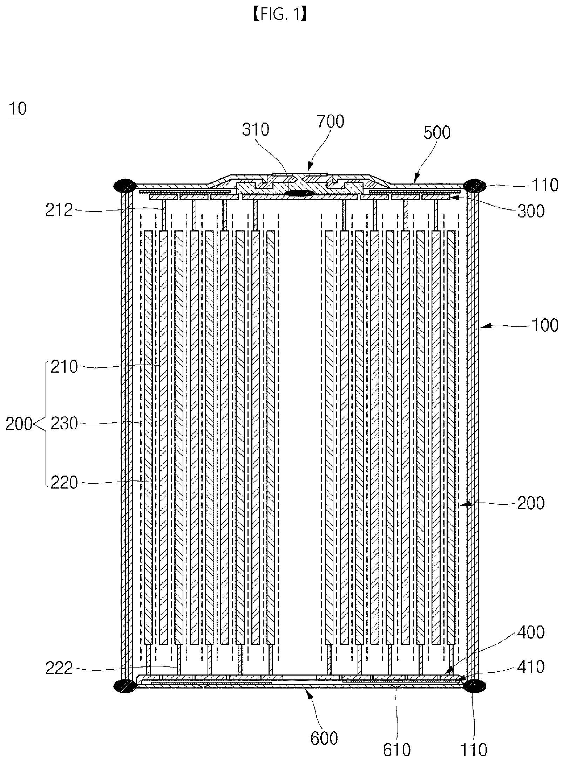

Hereinafter, a cylindrical secondary battery, according to embodiments of the present disclosure, will be described, in detail, with reference to the accompanying drawings. For convenience, an upper side herein is defined as an upper portion, and a lower side is defined as a lower portion based on the orientation of FIG. 1.

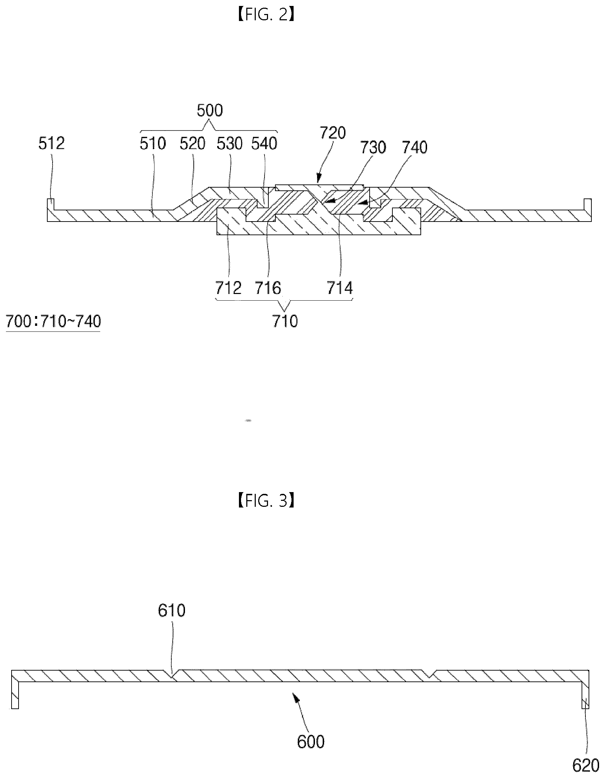

FIG. 1 is a schematic cross-sectional view of a cylindrical secondary battery according to embodiments; FIG. 2 is an enlarged cross-sectional view of a cap plate and a first terminal of the cylindrical secondary battery illustrated in FIG. 1. FIG. 3 illustrates an enlarged cross-sectional view of a bottom plate illustrated in FIG. 1.

Referring to FIG. 1, a cylindrical secondary battery 10 according to embodiments of the present disclosure may include a cylindrical can 100, a cap plate 500 coupled to one end of the can 100, and a bottom plate 600 coupled to another end (e.g., an opposite end) of the can 100. The electrode assembly 200 may be accommodated together with an electrolyte in the can 100. The electrode assembly 200 may be electrically connected to a first electrode collector plate 300 and a second electrode collector plate 400, which may be electrically connected to a first terminal 700 and the can 100, respectively. After the can 100 and the bottom plate 600 are assembled, the electrode assembly 200 connected to the first electrode collector plate 300 and the second electrode collector plate 400 may be accommodated therein, and the cap plate 500 may be assembled to seal the can 100.

Referring to FIG. 1, the can 100 may have a hollow cylindrical shape, and at least one of one end or the other end of the can 100 in a longitudinal direction may be open. When one end of the can is open, the other end of the can may be a circular bottom part and a side part extends from the bottom part. The bottom part and the side part may be integrated with each other. When both ends of the can 100 are open, the circular bottom plate 600 may be separately coupled to the can 100 (e.g., separately coupled to the side part of the can). The can 100 may be made of steel, a steel alloy, nickel-plated steel, a nickel-plated steel alloy, aluminium, an aluminium alloy, or an equivalent thereof but is not limited thereto.

Referring to FIG. 1, the electrode assembly 200 may include a first electrode plate 210, a second electrode plate 220, and a separator 230. For example, the first electrode plate 210 may be a positive electrode plate on which a positive electrode active material layer (e.g., a transition metal oxide, such as LiCoO₂, LiNiO₂, LiMn₂O₄, etc.) is disposed on each of both surfaces thereof. The first electrode plate 210 may have a first electrode non-coating portion 212 on which the positive electrode active material layer is not disposed. The first electrode non-coating portion 212 may be disposed to face (e.g., may be disposed nearest to) an upper portion of the can 100, which is one end of the can 100, with respect to FIG. 1. In some embodiments, the second electrode plate 220 may be a negative electrode plate on which a negative electrode active material layer (e.g., graphite, carbon, etc.) is disposed on each of both surfaces thereof. The second electrode plate 220 may have a second electrode non-coating portion 222 to which the negative electrode active material layer is not disposed. The second electrode non-coating portion 222 may be disposed to face (e.g., may be disposed nearest to) a lower portion of the can 100, which is the other end of the can 100, with respect to FIG. 1. In some embodiments, the separator 230 may be interposed between the first electrode plate 210 and the second electrode plate 220 to prevent short circuit while allowing lithium ions to move therebetween. For example, the first electrode plate 210 may be an aluminium (Al) foil, the second electrode plate 220 may be a copper (Cu) or nickel (Ni) foil, and the separator 230 may be made of polyethylene (PE) or polypropylene (PP), but the present disclosure is not limited to the above materials. The first electrode plate 210, the second electrode plate 220, and the separator 230 may be wound in a substantially cylindrical shape and accommodated in the can 100. The first electrode non-coating portion 212 may be electrically connected to the first electrode collector plate 300, and the second electrode non-coating portion 222 may be electrically connected to the second electrode collector plate 400.

Referring to FIG. 1, the first electrode collector plate 300 may be disposed between the first electrode non-coating portion 212 and the cap plate 500 and electrically connected to the first electrode non-coating portion 212. An insulator 410 may be inserted between the first electrode collector plate 300 and the cap plate 500. The first electrode collector plate 300 may be electrically connected to a first terminal 700, to be described later, by welding (e.g., to form a welding part 310). Thus, because the first electrode non-coating portion 212 and the first terminal 700 are electrically connected to each other, the first terminal 700 may be a positive electrode.

The second electrode collector plate 400 may be disposed between the second electrode non-coating portion 222 and the bottom plate 600 and electrically connected to the second electrode non-coating portion 222. The second electrode collector plate 400 may be in contact with or welded to the bottom plate 600 or the can 100 and, thus, may be electrically connected to the bottom plate 600 or the can 100. An insulator 410 may be inserted between the second electrode collector plate 400 and the bottom plate 600 to insulate an area other than a portion that is in contact with the bottom plate 600 or the can 100. Thus, because the second electrode non-coating portion 222 and the can 100 are electrically connected to each other, the can 100 may be a negative electrode.

Referring to FIGS. 1 and 2, the cap plate 500 may have a substantially circular plate shape when viewed from above and may be welded to the can 100 to seal the can 100. The cap plate 500 may be made of aluminium or the same material as the can 100. The cap plate 500 may have a circular plate ring shape having a hollow (e.g., an opening) at a center thereof. The bottom plate 600 may be coupled to the lower portion of the can 100 facing the cap plate 500.

In some embodiments, the cap plate 500 may have a first plate part 510 parallel to the first electrode collector plate 300, an inclined part 520 connected to the first plate part 510 and inclined upwardly from the first plate part 510, a second plate part 530 connected to the inclined part 520 and parallel to the first plate part 510, and an extension part 540 extending vertically downward from the second plate part 530.

A protrusion 512 protruding upwardly may be disposed along an edge (e.g., an outer edge) of the first plate part 510. The protrusion 512 may be a portion welded to the can 100 and may provide a welding part 110 seated on the can 100 to be melted during laser welding and welded to the can 100. Because the first plate part 510 is welded to the can 100, the first plate part 510 may have the same negative polarity as the can 100.

The inclined part 520 may extend upwardly to form an obtuse angle with respect to the first plate part 510.

The second plate part 530 may have an area less than that of the first plate part 510. One end of the second plate part 530 may be connected to the inclined part 520 and the other end thereof may be disposed toward the hollow. The end of the second plate part 530 toward (e.g., extending toward or nearest to) the hollow may be bent downwardly to form the extension part 540. The first terminal 700 may be disposed below the second plate part 530 and the extension part 540.

Referring to FIG. 3, the bottom plate 600 may have a substantially circular plate shape when viewed from below and may be coupled to the lower portion of the can 100 to seal the can 100. A notch 610, which is configured to rupture if a gas pressure inside the can 100 exceeds a reference (or predetermined) value, may be provided in a plate surface of the bottom plate 600. A protrusion 620 may protrude downwardly along an edge of the bottom plate 600. The protrusion 620 may be welded to the can 100 to form a welded portion 110.

Referring to FIGS. 1 and 2, the above-described first terminal 700 may include a base block 710 electrically connected to the first electrode collector plate 300, a head 720 exposed to the outside to be electrically connected to a device, a fusible link 730 connecting the base block 710 to the head 720, and an insulation member 740 insulating the first terminal 700 from the cap plate 500. In some embodiments, the base block 710, the head 720, and the fusible link 730 may be made of aluminium.

The base block 710 may have a circular plate shape when viewed from the bottom and may have a flat bottom surface and a top surface having an uneven structure. The bottom surface of the base block 710 may be connected (e.g., electrically connected) to the first electrode collector plate 300 by welding or the like (e.g., to form a weld portion 310). In some embodiments, the base block 710 may include a first protrusion 712 protruding upwardly along an edge of the top surface of the base block 710 and a second protrusion 714 protruding upwardly at the center of the top surface of the base block 710. A groove 716 recessed downwardly between the first protrusion 712 and the second protrusion 714 may be defined in the top surface of the base block 710. A height from the bottom surface of the base block 710 to the top surface of the first protrusion 712 may be greater than a height from the bottom surface of the base block 710 to the top surface of the second protrusion 714 (e.g., the first protrusion 712 may be taller than the second protrusion 714). A height from the bottom surface of the base block 710 to the top surface of the groove 716 may be less than a height from the bottom surface of the base block 710 to the top surface of the second protrusion 714. Accordingly, the first protrusion 712 is disposed below the second plate part 530, and the groove 716 is defined below the extension part 540, described above. Due to this arrangement, the protruding portion of the first terminal 700 may be disposed on the protruding portion of the cap plate 500, and the protruding portion of the cap plate 500 may be disposed in the recessed portion of the first terminal 700. In some embodiments, the cap plate 500 and the first terminal 700 may be disposed in a structure in which the cap plate 500 and the first terminal 700 are alternately engaged with each other. The head 720 may be disposed to be spaced a distance from (e.g., a predetermined distance from) the top surface of the second protrusion 714.

The head 720 may be a portion exposed to the outside and electrically connected to the base block 710 by the fusible link 730. Therefore, the head 720 has a positive polarity. In some embodiments, the head 720 may have a circular plate shape. A top surface of the head 720 may protrude from (e.g., may protrude above) the top surface of the second plate part 530 of the cap plate 500 or may be disposed at the same height as the top surface of the second plate part 530 of the cap plate 500.

The fusible link 730 may mechanically and electrically connect the base block 710 to the head 720. The fusible link 730 may have a diameter less than a diameter of the head 720 and may have an hourglass shape. In some embodiments, the fusible link 730 may have a structure in which a portion of the fusible link 730 extending downwardly from the head 720 has a diameter that gradually decreases toward a lower side and a portion of the fusible link 730 extending upwardly from the base block 710 has a diameter that gradually decreases toward an upper side are connected to each other. In some embodiments, the base block 710 and the head 720 may be soldered to each other to act as the fusible link 730. In some embodiments, because the fusible link 730 has the diameter less than that of the head 720, a shape of the fusible link 730 is not limited as long as the fusible link 730 is melted if high current passes therethrough.

The insulation member 740 may be made of, for example, a glass to metal sealing (GTMS) material or a polymer material. The insulation member 740 may insulate the cap plate 500 from the first terminal 700 by being filled into the space between the base block 710 and the head 720 and may seal the inside of the can 100.

In an embodiment in which the insulation member 740 is made of the GTMS material, the insulation member 740 may be prepared by mixing a binder with glass powder, then, pressing and molding the mixture into the desired shape, and then, disposing the cap plate 500 and the first terminal 700 on the mixture and integrating all three components in a sintering process. In an embodiment in which the insulation member 740 is made of the polymer material, the insulation member 740 may be manufactured to be thicker than a gap between the cap plate 500 and the base block 710 and then disposed under the cap plate 500, and the first terminal 700 may be bonded to be in close contact with the cap plate 500 and the base block 710 through heat treatment.

In the cylindrical secondary battery, according to embodiments of the present disclosure, an operation of the fusible link and a state of the secondary battery if a high current is generated will be described below.

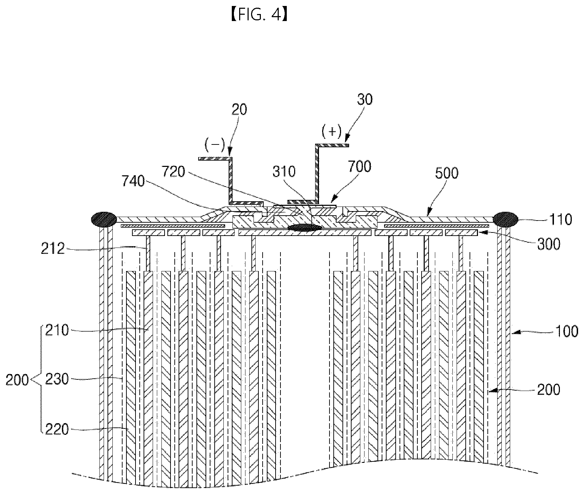

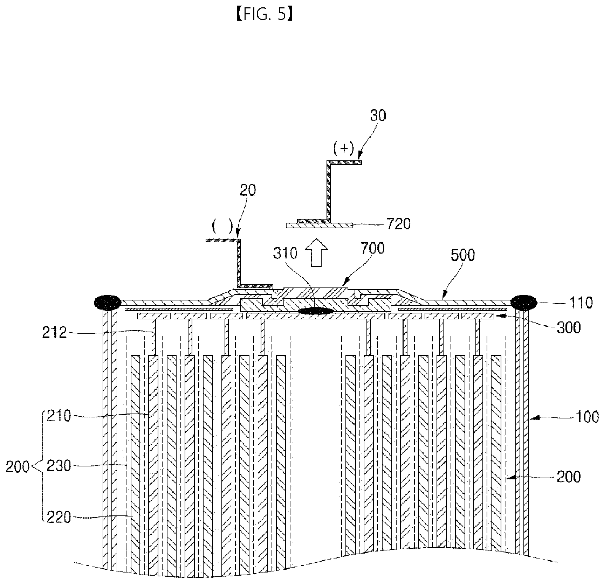

FIG. 4 is a schematic cross-sectional view of an electrical connection relationship in the cylindrical secondary battery illustrated in FIG. 1. FIG. 5 illustrates a cross-sectional view of the cylindrical secondary battery illustrated in FIG. 4 in a separated state.

Referring to FIG. 4, in the cylindrical secondary battery 10, an external positive electrode terminal 30 may be connected to the head 720 of the first terminal 700, and an external negative terminal 20 may be connected to the cap plate 500. If a high current exceeding limit value is generated due to, for example, an external short circuit or heat generation, resistance in the fusible link 730 having the diameter less than that of the head 720 or the base block 710 may significantly increase such that the fusible link 730 melts and becomes disconnected, referring to FIG. 5. In some embodiments, the external positive electrode terminal 30 and the head 720 of the first terminal 700 may be separated from the base block 710. In some embodiments, the fusible link 730 may act as a fuse for cutting off the current.

When the insulation member 740 is made of the GTMS material, the insulation member 740 may be very resistant to high heat, and thus, even if the head 720 is detached and separated, the base block 710 and the cap plate 500 may remain insulated and sealed therebetween referring to FIG. 5 because the insulation member 740 is filled in the space in which the protruding and recessed structures of the cap plate 500 and the first terminal 700 are alternately disposed. Therefore, the sealing and insulation of the secondary battery 10 may be secured even if the high current is generated and the current is cut off, and thus, safety may be maintained.

In some embodiments, the cap plate and the first terminal of the cylindrical secondary battery may have structures different from those of the above-described embodiment. Hereinafter, detailed descriptions of the same structures as those of the above-described embodiment will be omitted for convenience.

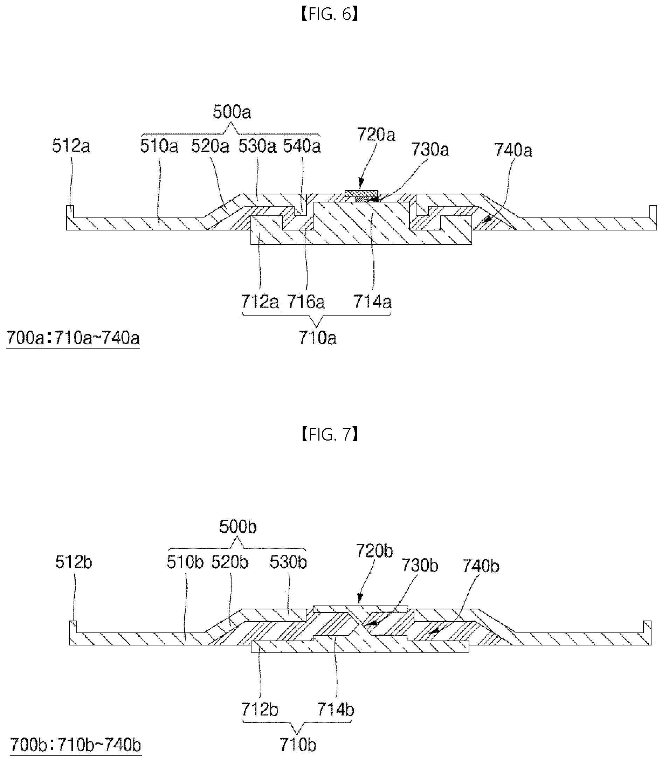

FIGS. 6 to 8 are views of a cap plate and a first terminal according to other embodiments.

A cap plate 500a illustrated in FIG. 6 may have the same structure as the cap plate 500 illustrated in FIG. 3.

A first terminal 700a illustrated in FIG. 6 may include a base block 710a electrically connected to a first electrode collector plate 300, a head 720a exposed to the outside, a fusible link 730a connecting the base block 710a to the head 720a, and an insulating member 740a insulating the first terminal 700a from the cap plate 500a. For example, each of the base block 710a and the head 720a may be made of aluminium, and the fusible link 730a may be formed by soldering. In some embodiments, a connection portion generated by connecting the base block 710a to the head 720a by the soldering may act as a fusible link 730a. For this, the base block 710a may have a first protrusion 712a and a groove 716a formed, for example, in the same manner as in the base block 710 shown in FIG. 3, and the base block 710a may have a second protrusion 714a protruding to be adjacent to the head 720a. In some embodiments, a top surface of the second protrusion 714a may have a shape closer to (e.g., nearer to) the head 720a than a top surface of the first protrusion 712a. Other structures may be the same as those in the embodiment shown in FIG. 3. In the embodiment shown in FIG. 6, because the fusible link 730a, which is a soldered portion, may have a size less than that of the head 720a or the base block 710a and has a melting point less than that of aluminium, if high current is generated, the fusible link 730a may be melted to block the current. In some embodiments, because the insulating member 740a is a GTMS material, if the high current is generated, the fusible link 730a may be broken, but even if the head 720a is separated, insulating and sealing of the secondary battery 10 may be maintained.

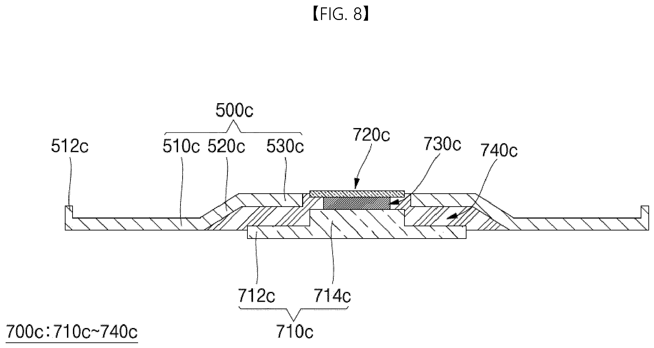

A cap plate 500b illustrated in FIGS. 7 and 8 may have the same structure as the cap plate 500 illustrated in FIG. 3 except for an extension part 540.

A first terminal 700b illustrated in FIG. 7 may include a base block 710b electrically connected to a first electrode collector plate 300, a head 720b exposed to the outside, a fusible link 730b connecting the base block 710b to the head 720, and an insulating member 740b insulating the first terminal 700b from a cap plate 500b.

The base block 710b may include a plate-shaped first protrusion 712b and a second protrusion 714b protruding further upwardly than the first protrusion 712b, but a groove may be omitted in this embodiment. The fusible link 730b connecting a top surface of the second protrusion 714b to the head 720b may have an hourglass shape, similar to the embodiment shown in FIG. 3. In some embodiments, referring to FIG. 8, only the fusible link 730c may be formed by soldering, different from the embodiment shown in FIG. 7. Accordingly, only a height of the second protrusion 714c of the base block 710c shown in FIG. 8 may be greater than that of the second protrusion 714b shown in FIG. 7.

In the embodiments shown in FIGS. 7 and 8, if high current is generated, the fusible links 730b and 730c may melt to block (or cut off) the current. In some embodiments, because each of the insulating members 740b and 740c is the GTMS material, if the high current is generated, each of the fusible links 730b and 730c may be broken (e.g., may melt), and thus, even if each of the heads 720b and 720c is separated, insulating and sealing of the secondary battery may be maintained.

The secondary battery, according to embodiments of the present disclosure, may further include a structure for preventing an external short circuit.

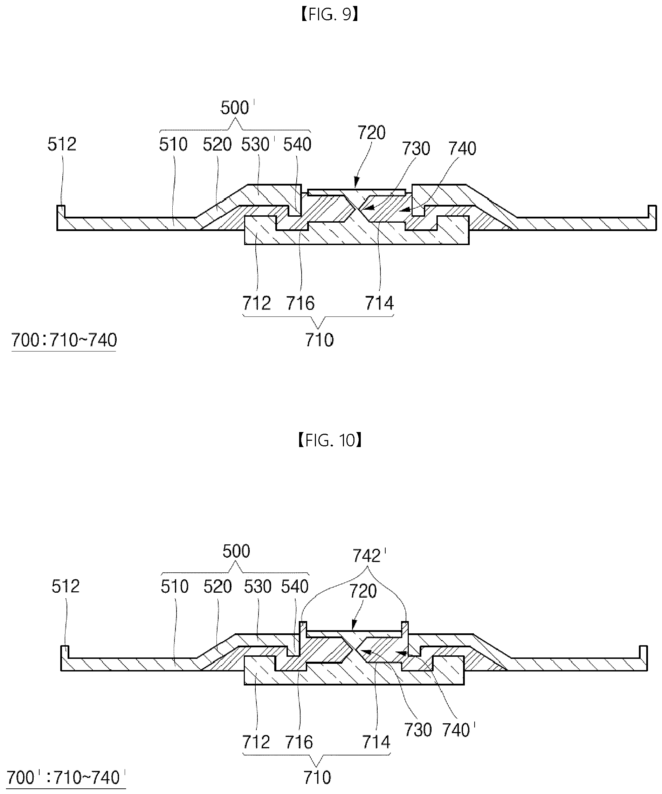

FIGS. 9 and 10 are views of a cap plate and a first terminal according to other embodiments.

In some embodiments, referring to FIG. 9, in a cap plate 500', a surface of a second plate part 530' (e.g., the top surface with reference to FIG. 9) may protrude further outwardly than a surface of a head 720 of a first terminal 700. In some embodiments, referring to FIG. 9, a surface height of the second plate part 530' may be higher than a surface height of the head 720. Accordingly, a thickness of the second plate part 530' may be greater than that of the first plate part 510 or the inclined part 520.

In some embodiments, for example, referring to FIG. 10, an insulation member 740' may include a protrusion 742' disposed on a top surface thereof that protrudes further outwardly than the surface of the head 720 of the first terminal 700' (e.g., the surface exposed between the second plate part 530 and the head 720).

Due to the structure illustrated in FIG. 9 or 10, even if a linear metal object is in contact with the outside of the secondary battery 10, the insulation between the first terminal and the cap plate may be maintained to minimize the occurrence of an external short circuit. In some embodiments, limitations such as short circuit marks, voltage drop, damage, poor outer appearance, leakage, and the like may be prevented from occurring.

According to embodiments of the present disclosure, a rivet terminal structure may be improved to cut off current if high current is generated, thereby improving safety of the secondary battery.

The above-mentioned embodiments are merely some embodiments of the present disclosure, and thus, the present disclosure is not limited to the foregoing embodiments. It will be understood by those of ordinary skill in the art that various changes in form and details may be made therein without departing from the scope of the present disclosure as defined by the following claims and their equivalents.

## Claims

1. A cylindrical secondary battery comprising:
a cylindrical can having an open end in a longitudinal direction thereof;
a cap plate coupled to the can and having an opening therein;
an electrode assembly accommodated in the can and comprising a first electrode plate and a second electrode plate; and
a first terminal comprising:
a base block electrically connected to the first electrode plate;
a head facing the base block and exposed to the outside through the opening; and
a fusible link connecting the base block and the head to each other and having a diameter less than that of the head.

2. The cylindrical secondary battery as claimed in claim 1, wherein the fusible link has an hourglass shape.

3. The cylindrical secondary battery as claimed in claim 1, wherein the fusible link is formed by soldering.

4. The cylindrical secondary battery as claimed in any one of claims 1 to 3, wherein the first terminal further comprises an insulation member between the base block and the head.

5. The cylindrical secondary battery as claimed in claim 4, wherein the insulation member is made of a glass to metal sealing material.

6. The cylindrical secondary battery as claimed in claim 4 or claim 5,
wherein the insulation member has a protrusion that protrudes further outwardly than a surface of the head.

7. The cylindrical secondary battery as claimed in any one of claims 1 to 6, further comprising:
a first electrode collector plate electrically connected to the first electrode plate and the first terminal; and
a second electrode collector plate electrically connected to the second electrode plate and the can.

8. The cylindrical secondary battery as claimed in claim 7, wherein the can has two open ends in the longitudinal direction,
wherein the cap plate is coupled to one of the open ends of the can, and
wherein a circular bottom plate is coupled to the other one of the open ends of the can.

9. The cylindrical secondary battery as claimed in claim 8, wherein the first electrode collector plate faces the cap plate, and
wherein the second electrode collector plate faces the bottom plate.

10. The cylindrical secondary battery as claimed in any one of claims 1 to 9, wherein the cap plate comprises:
a flat first plate part;
an inclined part inclined upwardly from the first plate part;
a second plate part connected to the inclined part and parallel to the first plate part; and
an extension part extending from the second plate part toward the base block.

11. The cylindrical secondary battery as claimed in claim 10, wherein a surface of the second plate part protrudes further outwardly than a surface of the head.
